# EUROPEAN PATENT SPECIFICATION

(11) **EP 2 489 991 B1**
(45) Date of publication and mention of the grant of the patent: **18.10.2017**
(21) Application number: 12250033.3
(22) Date of filing: 16.02.2012
(51) Int. Cl.: G01D 11/28, B60Q 3/14

(54) **Tell tale over cluster light guide**
Kontrollfunktion für Cluster-Lichtleiter
Voyant lumineux sur un guide de lumière pour cluster

(30) Priority: 16.02.2011 US 201113028639
(43) Date of publication of application: 22.08.2012
(73) Proprietor: Continental Automotive Systems, Inc., Auburn Hills, MI 48326 (US)
(72) Inventor: BIRMAN, Vyacheslav B., Michigan 48326 (US); BROWN, Arthur S., Michigan 48312 (US)
(74) Representative: Bonn, Roman Klemens

(56) References cited:
- WO-A1-2010/033114
- US-A1- 2006 012 971
- US-A1- 2010 083 894
- US-B1- 7 534 000

## Description

### BACKGROUND

This disclosure generally relates to an instrument panel for an automobile that includes tell tale light features spaced apart from a gauge surface that receive light from light emitting devices mounted to a main circuit board.

Instrument clusters are arranged in vehicles to provide information indicative of vehicle operations to a driver. Vehicle information is communicated through gauges that provide a continuous reading for a vehicle operating parameter. Another means of communicating information to the driver is through selectively lighted icons commonly known to as "tell tales". Tell tales remain unlit until some measured parameter or vehicle-operating conditions warrants notification of the driver. Examples of such tell tales include the check engine light, low tire pressure icon, along with other icons that represent operation of a vehicle system. Moreover, a vehicle turn signal indicator may also be considered a tell tale. In some instrument cluster configurations, many tell tales may be provided that can take up considerable available space on the visible surfaces of the gauge. Moreover, each tell tale will typically require its own dedicated light source that is controlled by the vehicle controller. Commonly the light source comprises a light emitting diode that is supported on a circuit board mounted immediately under the surface to be lighted. Accordingly, each surface that includes tell tales typically includes a corresponding circuit board. As appreciated, the number of tell tales and available space is limited to the surface area of the instrument gauge. Furthermore, the placement of lights and the required light housings further complicates manufacture and limits placement in the instrument panel.

US 7,534,000 B1 (Adachi) appears to describe a vehicle display having an LCD display that is employed to communicate a first type of vehicle information and a second set of vehicle information in which the information that is to be communicated can include or consist of symbols. A display light guide is employed to distribute light from two light sources to selectively illuminate portions of the display screen of the LCD display. The LCD display can be employed to generate telltale warning indicators. The LCD display provides flexibility in the display of information so that a relatively large quantity of telltale warning indicators can be handled without specifically dedicating a light source, a light tunnel and space on the vehicle display for each telltale warning indicator that may be employed in a vehicle.

WO 2010/033114 A1 (Continental Automotive Systems) appears to describe an illuminated gauge assembly which includes a top surface of a light housing that includes a scale and a light guide that extends through the light housing for distributing light onto the surface of the top surface. A single light source is disposed below the light housing and directs through the light guide onto the top surface of the light housing.

US 2010/083894 A1 (Birman) appears to describe an instrument cluster which includes a gauge with selectively and visually variable features to communicate vehicle information to a vehicle operator. A border is illuminatable by colored LED assemblies to provide an indication of the range of a vehicle operating condition. A pointer assembly is also selectively illuminatable to provide a visual reference of a specific operating condition that is responsive and varies depending on a specific current operating condition. A digital display within the gauge includes telltales that are also selectively illuminatable and visually variable, responsive to specific operating conditions to communicate not only a problem or an issue with a specific feature but also a range or magnitude of alert to the vehicle operator.

US 2006/012971 A1 (Fong) appears to describe a gauge having a housing, a light source disposed in the housing, a bezel, a display and a pointer. The display is coupled to the housing and includes a display surface that is visible through an opening in the bezel. The display is spaced rearwardly of the bezel to define a light transmitting aperture. The pointer is movably mounted to the housing and includes a pointer end that is disposed on a side of the bezel opposite the light transmitting aperture. A first portion of the light produced by the light source can be employed to back-illuminate the display surface, while a second portion of the light produced by the light source can be collected by the pointer and employed to illuminate the pointer end.

### SUMMARY

According to an aspect of the present invention there is provided a gauge assembly in accordance with the appended claims.

A disclosed instrument cluster for a motor vehicle includes a gauge that includes a scale on a gauge surface and a tell tales that are supported on a second surface spaced apart from the gauge surface.

The example disclosed gauge provides information indicative of vehicle speed and includes a pointer that moves relative to the scale to indicate a current measured vehicle parameter. A tell tale housing is supported above and spaced apart from the gauge face. A main circuit board supports light emitting devices such as LEDs. The LEDs are turned on or off to illuminate the corresponding tell tale. A light guide is supported within the tell tale housing and directs light from the LED to the at least one tell tale spaced apart from the main circuit board and the main gauge surface.

These and other features disclosed herein can be best understood from the following specification and drawings, the following of which is a brief description.

### BRIEF DESCRIPTION OF THE DRAWINGS

Figure 1 is a front view of an example instrument cluster.
Figure 2 is a perspective view of a portion of an example gauge.
Figure 3 is an exploded view of an example gauge including tell tale over the gauge face.
Figure 4 is a cross-sectional view of the example gauge.
Figure 5 is a cross-sectional view of another example gauge.
Figure 6 is a perspective view of an example light housing assembly.

### DETAILED DESCRIPTION

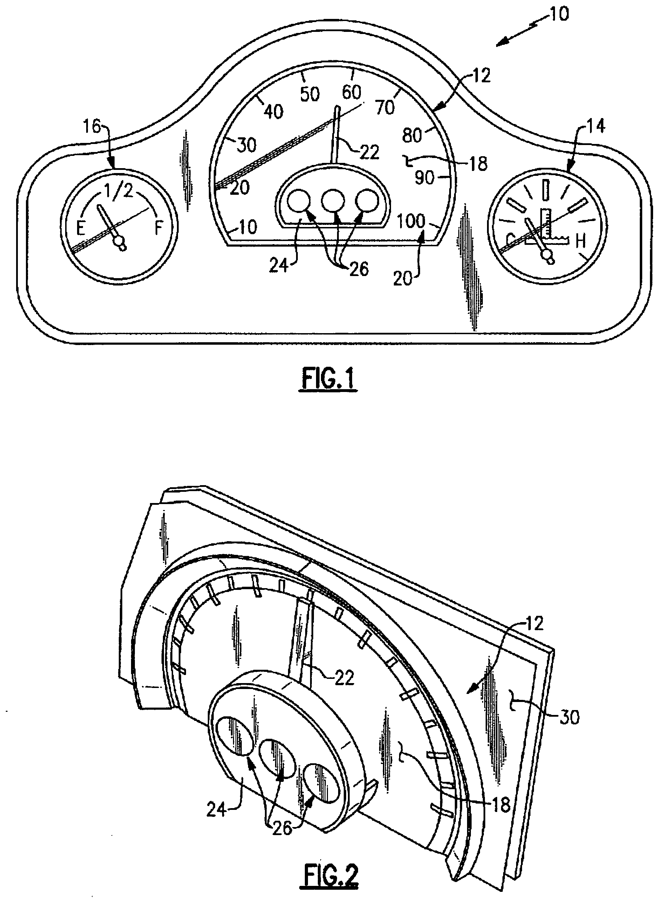

Referring to Figure 1 an instrument cluster 10 for a motor vehicle includes a main gauge 12 and secondary gauges 14, 16. The example main gauge 12 includes a gauge face 18 with a scale 20 that provides information indicative of vehicle speed. A pointer 22 moves relative to the scale 20 to indicate a current measured speed of the vehicle. A tell tale housing 24 is supported above and spaced apart from the gauge face 18. The tell tale housing 24 includes a second surface 25 with selectively illuminatable images commonly referred to as tell tales 26.

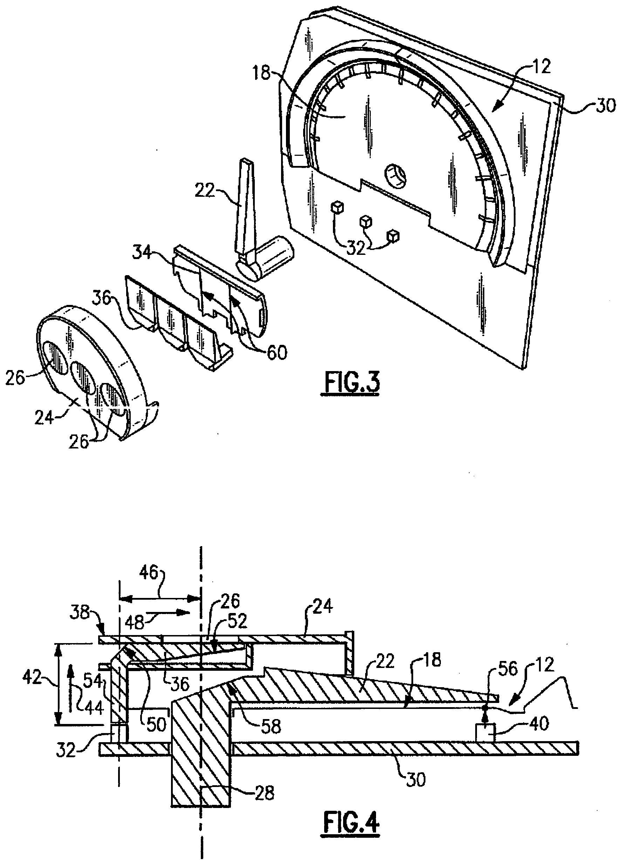

Referring to Figure 2 and 3 with continued reference to Figure 1, the gauge 12 includes a main circuit board 30 that includes light emitting diodes (LED) 32. The LEDs 32 are turned on or off to illuminate the corresponding tell tale 26. The main circuit board 30 is disposed a distance away from the corresponding tell tale 26. The housing 24 includes the second surface 25 that includes the tell tales 26 and that are spaced a distance apart from the main circuit board 30. In this example, three LEDs 32 are mounted to the main circuit board 30 for three corresponding tell tales 26. A light guide 36 is supported within the tell tale housing 24 and directs light from the at least one LED 32 to the at least one tell tale 26.

Referring to Figure 4 with continued reference to Figure 3, the tell tales 26 are spaced a first distance 42 in a first direction 44 and a second distance 46 in a second direction 48 transverse to the first direction 44 apart from the at least one LED 32. The spacing requires that light from the LED 32 turn at least twice to be emitted through the tell tale 26. The proximity of the LED 32 relative to the tell tale 26 and the axis of rotation 28 of the pointer 22 is possible through the direction of light by the light guide 36. The tell tale 26 is not directly below or aligned with the corresponding LED 32.

The example light guide 36 includes a first surface 50 that reflects light (indicated by arrows) in the second direction 48 and a second surface 52 reflects at least a portion of light the reflected light from the first surface 50 in the first direction 44 and through the corresponding tell tale 26. Accordingly, the light guide 36 provides for transmission of light from a distantly located LED 32 mounted on the main circuit board 30 to the tell tale image 26 spaced both vertically and horizontally apart from the corresponding LED 32. The example light guide 36 includes a leg portion 54 directing light from the LED 32 toward the first surface 50.

The light guide 36 is supported within a light housing 34 that contains light emitted from each of the individual LEDs 32. The example light housing 34 includes dividers 60 disposed between individual portions of the light guide 32. Each individual portion of the light guide 36 directs light from one of the LEDs 32 to a corresponding one of the tell tales 26.

The example housing 24 comprises a rounded shape that corresponds with the shape of the gauge 12 and the scale 20. However, the housing 24 may be provided in other shapes as are desired. Moreover, although the example housing 24 supports three tell tales 26; more or less tell tales 26 could be provided as desired.

The example pointer 22 rotates about the axis 28 disposed transverse to the gauge surface 18. The example tell tales 26 are supported at least partially over the axis 28 and are therefore not only spaced vertically apart from the LEDs 32 supported on the main circuit board 30 but are also horizontally spaced apart. Accordingly, the housing 24 supports the tell tales 26 and the light guide 36 over the axis 28 and a portion of the pointer 22. As appreciated, the terms vertically and horizontally are in reference to the orientation shown in the Figures and are meant to describe relative position of specific parts. As appreciated, the gauge assembly 10 may be arranged differently within a vehicle. Moreover, the example tell tales 26 may be spaced over a gauge that does not include a pointer as is shown in this example. Accordingly, the LEDs 32 are spaced apart from the tell tales 26 both in the first direction 42 and in the second direction 46 that is transverse to the first direction 42.

The example gauge 12 includes a backlighting LED 40 for illuminating the scale 20. The example LED 40 is mounted onto the main circuit board 30 with the LEDs 32 for illuminating the tell tales 26 disposed above the pointer 22. The LED 40 illuminates portions 56 of the gauge that include both numerals and tick marks. Further, the pointer 22 includes a reflecting surface 58 for directing light through the pointer 22. Accordingly, both the LEDs 32 and the LED 40 are mounted on the same circuit board 40. Mounting of all of the LEDs 32 and 40 onto the main circuit board 30 reduces overall costs and complexity.

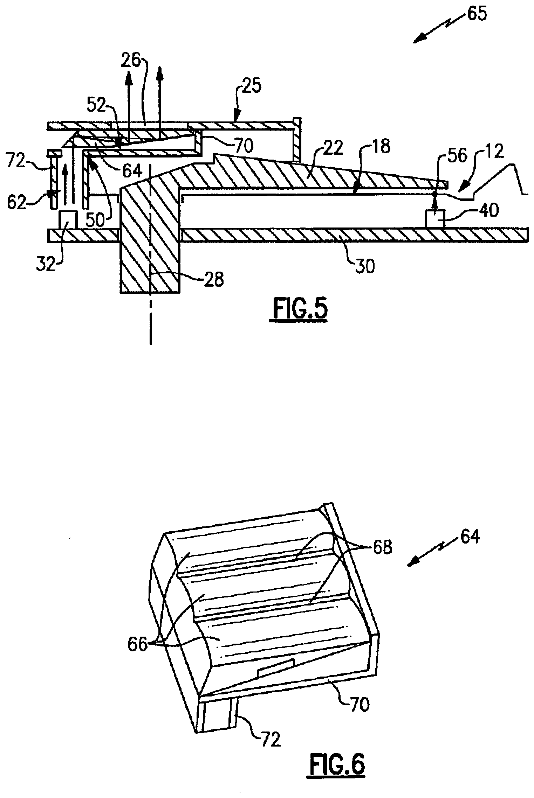

Referring to Figures 5 and 6, another example light guide assembly 64 includes a plurality of light guides 66 and the plurality of light housings formed as a single component In this example a known dual injection molding process is utilized to first form the light guides 66 and subsequently to form the light housing 70 around the already formed light guides 66. The light guides 66 are formed from a light transmitting material and the light housing 70 is formed from a non-transmitting material. Moreover, the light housing 70 may be coated to further contain light within the light guides 66.

The example light guides 66 do not include legs that extend toward the corresponding LED 32. Instead, the light housing 70 includes a leg portion 72 that extends toward the LED 32. The extended leg portion 72 of the light housing 70 at least partially blocks light from bleeding in from an adjacent LED 32. The example light housing assembly 64 provides a one-piece part that is supported within the example tell tale-housing 24.

In operation, light indicated by arrows 62 is transmitted through the leg portion 72 of the light housing 70 to the first reflective surface 50 of the light guide 66. Light is reflected substantially transversely toward the second reflective surface 52. The second reflective surface 52 directs light through the tell tale image 26 such that an operator is alerted to the message or information conveyed by the tell tale image 26.

Accordingly, the example disclosed gauge assemblies provide for the positioning of tell tales away from the face of the gauge, while maintaining the positioning of the LEDs that illuminate the tell tales on a main circuit board of that gauge assembly.

Although an example embodiment has been disclosed, a worker of ordinary skill in this art would recognize that certain modifications would come within the scope of this disclosure. For that reason, the following claims should be studied to determine the scope and content of this invention.

## Claims

1. A gauge assembly (12) comprising:
a gauge surface (18) including a scale (20) indicative of a vehicle operating condition;
a main circuit board (30) including at least one light-emitting device (32);
a tell tale housing (24) supported above and spaced apart from the gauge surface (18), the tell tale housing (24) including a second surface (25), the second surface (25) including at least one tell tale (26); and
a light guide (36) supported within the tell tale housing (24) communicating light from the at least one light emitting device (32) to the at least one tell tale (26), wherein the tell tale (26) is spaced a first distance (42) in a first direction (44) and a second distance (46) in a second direction (48) transverse to the first direction (44) apart from the at least one light emitting device (32) and the light guide (36) includes a first surface (50) reflecting light in the second direction (48) and a second surface (52) reflecting a portion of the reflected light from the first surface (50) in the first direction (44).

2. The gauge assembly as recited in claim 1, wherein the light guide (36) includes a leg portion (72) directing light from the light-emitting device (32) to the first surface (50).

3. The gauge assembly as recited in claim 1 or 2, including a pointer (22) rotating about an axis (28) transverse to the gauge surface (18), the tell tale (26) disposed at least partially over the axis (28).

4. The gauge assembly as recited in claim 3, the housing (24) supporting the light guide (36) and the tell tale (26) over the axis (28) and a portion of the pointer (22).

5. The gauge assembly as recited in any preceding claim, including a light housing (34) for containing light from the light-emitting device (32).

6. The gauge assembly as recited in claim 5, including a plurality of the light emitting devices disposed on the main circuit board and a corresponding plurality of the light guides (66) and the light housings for selectively illuminating a corresponding plurality of tell tales.

7. The gauge assembly as recited in claim 6, wherein the plurality of the light guides and a corresponding plurality of the light housings form a single component.

8. An instrument cluster assembly (10) comprising at least one gauge assembly (12) as claimed in any preceding claim.

9. The instrument cluster assembly as recited in claim 8, including at least three gauges (12, 14, 16) with at least one of the at least three gauges including the at least one tell tale.

## Patentansprüche

1. Messgerätegruppe (12), aufweisend:
eine Messgeräteoberfläche (18), die eine Skala (20) aufweist, die eine Fahrzeugbetriebsbedingung anzeigt;
eine Hauptleiterplatte (30), die mindestens eine lichtemittierende Vorrichtung (32) aufweist;
ein Kontrollleuchtengehäuse (24), das über und in einem Abstand von der Gehäuseoberfläche (18) gehalten wird, wobei das Kontrollleuchtengehäuse (24) eine zweite Oberfläche (25) aufweist, wobei die zweite Oberfläche (25) mindestens eine Kontrollleuchte (26) aufweist; und
einen Lichtleiter (36), der von dem Kontrollleuchtengehäuse (24) gehalten wird und Licht von der mindestens einen lichtemittierenden Vorrichtung (32) zu der mindestens einen Kontrollleuchte (26) überträgt, wobei die Kontrollleuchte (26) in einer ersten Richtung (44) in einem ersten Abstand (42) und in einer zweiten Richtung (48) quer zur ersten Richtung (44) in einem zweiten Abstand (46) von der lichtemittierenden Vorrichtung (32) angebracht ist und wobei der Lichtleiter (36) eine erste Oberfläche (50), die Licht in der zweiten Richtung (48) reflektiert, und eine zweite Oberfläche (52) aufweist, die einen Teil des reflektierten Lichts von der ersten Oberfläche (50) in die erste Richtung (44) reflektiert.

2. Messgerätegruppe nach Anspruch 1, wobei der Lichtleiter (36) einen Zweigabschnitt (72) aufweist, der Licht von der lichtemittierenden Vorrichtung (32) auf die erste Oberfläche (50) leitet.

3. Messgerätegruppe nach Anspruch 1 oder 2, die einen Zeiger (22) aufweist, der sich um eine Achse (28) quer zur Messgeräteoberfläche (18) dreht, wobei die Kontrollleuchte (26) mindestens teilweise über der Achse (28) angeordnet ist.

4. Messgerätegruppe nach Anspruch 3, wobei das Gehäuse (24) den Lichtleiter (36) und die Kontrollleuchte (26) über der Achse (28) und einem Teil des Zeigers (22) trägt.

5. Messgerätegruppe nach einem der vorhergehenden Ansprüche, die ein Lichtgehäuse (34) aufweist, das Licht von der lichtemittierenden Vorrichtung (32) enthält.

6. Messgerätegruppe nach Anspruch 5, die eine Vielzahl der lichtemittierenden Vorrichtungen, die auf der Hauptleiterplatte angeordnet sind, und eine entsprechende Vielzahl der Lichtleiter (66) und der Lichtgehäuse aufweist, um eine entsprechende Vielzahl von Kontrollleuchten selektiv zu erleuchten.

7. Messgerätegruppe nach Anspruch 6, wobei die Vielzahl der Lichtleiter und eine entsprechende Vielzahl der Lichtgehäuse eine einzige Komponente bilden.

8. Instrumentenclusterbaugruppe (10), die mindestens eine Messgerätegruppe (12) nach einem der vorhergehenden Ansprüche aufweist.

9. Instrumentenclusterbaugruppe nach Anspruch 8, die mindestens drei Messgeräte (12, 14, 16) aufweist, wobei mindestens eines der mindestens drei Messgeräte die mindestens eine Kontrollleuchte aufweist.

## Revendications

1. Ensemble indicateur (12), comprenant :
une surface d'indicateur (18) incluant une échelle (20) indicative d'une condition de fonctionnement de véhicule ;
une carte principale de circuit imprimé (30) incluant au moins un dispositif luminescent (32) ;
un logement de voyant lumineux (24) supporté au-dessus et espacé de la surface d'indicateur (18), le logement de voyant lumineux (24) incluant une seconde surface (25), la seconde surface (25) incluant au moins un voyant lumineux (26) ; et
un guide de lumière (36) supporté à l'intérieur du logement de voyant lumineux (24) communiquant de la lumière de l'au moins un dispositif luminescent (32) à l'au moins un voyant lumineux (26), dans lequel le voyant lumineux (26) est espacé, selon une première distance (42) dans une première direction (44) et selon une seconde distance (46) dans une seconde direction (48) transversale à la première direction (44), de l'au moins un dispositif luminescent (32) et le guide de lumière (36) inclut une première surface (50) réfléchissant de la lumière dans la seconde direction (48) et une seconde surface (52) réfléchissant une portion de la lumière réfléchie à partir de la première surface (50) dans la première direction (44).

2. Ensemble indicateur selon la revendication 1, dans lequel le guide de lumière (36) inclut une portion à pied (72) dirigeant de la lumière du dispositif luminescent (32) vers la première surface (50).

3. Ensemble indicateur selon la revendication 1 ou 2, incluant une aiguille (22) tournant autour d'un axe (28) transversal à la surface d'indicateur (18), le voyant lumineux (26) étant disposé au moins partiellement par-dessus l'axe (28).

4. Ensemble indicateur selon la revendication 3, le logement (24) supportant le guide de lumière (36) et le voyant lumineux (26) par-dessus l'axe (28) et une portion de l'aiguille (22).

5. Ensemble indicateur selon une quelconque revendication précédente, incluant un logement à lumière (34) pour contenir de la lumière du dispositif luminescent (32).

6. Ensemble indicateur selon la revendication 5, incluant une pluralité des dispositifs luminescents disposés sur la carte principale de circuit imprimé et une pluralité correspondante des guides de lumière (66) et des logements à lumière pour sélectivement éclairer une pluralité correspondante de voyants lumineux.

7. Ensemble indicateur selon la revendication 6, dans lequel la pluralité des guides de lumière et une pluralité correspondante des logements à lumière forment un seul composant.

8. Ensemble groupe d'instruments (10) comprenant au moins un ensemble indicateur (12) selon une quelconque revendication précédente.

9. Ensemble groupe d'instruments selon la revendication 8, incluant au moins trois indicateurs (12, 14, 16), au moins l'un des au moins trois indicateurs incluant l'au moins un voyant lumineux.
